# EUROPEAN PATENT APPLICATION

(11) **EP 4 712 525 A1**
(43) Date of publication of application: **18.03.2026**
(21) Application number: 24200559.3
(22) Date of filing: 16.09.2024
(51) Int. Cl.: H04W 8/18, H04W 8/20

(54) **METHOD AND SYSTEM FOR AI-GENERATED SUBSCRIBER PROFILE CONFIGURATIONS**

(71) Applicant: Giesecke+Devrient Mobile Security Germany GmbH, 81677 München (DE)
(72) Inventor: Mishra, Santosh Kumar, 110 020 New Delhi (IN); Pandey, Ankit, 110 020 New Delhi (IN); Parekh, Biren Shirish, 110 020 New Delhi (IN); Kulkarni M, Srinivas, 110 020 New Delhi (IN); Patel, Praveen, 110 020 New Delhi (IN)
(74) Representative: Ter Meer Steinmeister & Partner

(57) **Abstract**

Provided is a method of generating a subscriber profile configuration, preferably for a mobile communication network, in a data processing system. The method comprises: receiving configuration input data from at least one computer system external to the data processing system; processing the configuration input data by the artificial intelligence system, wherein the artificial intelligence system has been trained based on training data comprising an initialization structure, a plurality of personalization specifications and existing subscriber profile configurations generated based on the initialization structure and the plurality of personalization specifications; and generating the subscriber profile configuration based on the artificial intelligence system, wherein an output of the artificial intelligence system comprises the generated subscriber profile configuration.

## Description

The present invention relates to a computer-implemented method for generating a subscriber profile configuration, preferably for a mobile communication network, a data processing system which is configured to execute the method, a secure element which is configured to operate based on the generated subscriber profile configuration and a computer-readable medium storing instructions to execute the method.

Massive amounts of devices connect daily to existing mobile communication networks. The number of devices, in particular terminal devices or end (user) devices, is increasing at an accelerating pace due to the fourth industrial revolution which is driven by the Internet of Things, IoT.

For a secured communication over the mobile communication network, a mobile communication is required to include a secure element, in particular a subscriber identity module, SIM, including at least one subscriber profile. The subscriber profile comprises configurations for the file system, application data and a set of subscription data, including at least the International Mobile Subscriber Identity (IMSI), PIN and key files. The subscriber profile enables the terminal device to authenticate the terminal device to the mobile communication network and vice versa and enables various applications on the terminal device. Due to a personalization of each subscriber profile, the number of required subscriber profiles grows at least linearly with the number of devices.

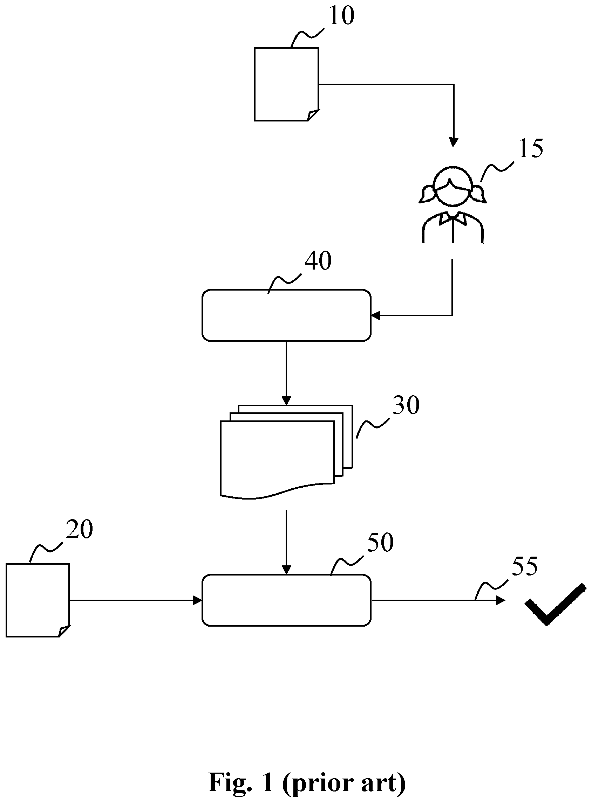

Fig. 1 summarizes the process of generating and validating subscriber profiles according to prior art. Accordingly, subscription profile configurations are generated manually based on an original source (OS) initialization (INI) document, which encodes customer requirements on a general specification of subscriber profile configurations. The OS initialization document comprises a list of parameters that are customer specific and may form a subset of the general specification. Several of the parameters may be configured based on a compile-time switch, i.e., enabled or disabled at compile time. The subscriber profile configuration may be input manually by a human operator into a profiler tool based on the OS INI document, i.e., the profiler tool is used by the human operator to create a subscriber profile.

The prepared subscriber profile is validated based on the general specification, without making any use of the customer specific requirements. Thus, subscriber profile configurations which violate the customer specific requirements may still pass current validation routines resulting in the delivery of faulty subscriber profiles to users. At least some of such faulty subscriber profiles may not even establish a connection to the mobile communication network and therefore cannot be fixed remotely. Similarly, compile-time configured parameters/attributes may not be reconfigured at runtime. Hence, the faulty subscriber profiles may be unusable or even be lost and may need to be replaced by a new subscriber profile, which underlies the same risk of being misaligned with respect to the customer requirements.

In addition, there is sufficient training and experience required to generate subscriber control profile configurations that do not only fulfill the general specification, but also the customer specific requirements. Usually, there is no or little learning from a previous subscriber profile generation for the generation of a subsequent generation of subscriber profiles. Moreover, this experience may easily be lost, namely in case of a new generation of human operators replacing experienced human operators.

Thus, there is a need for at least partially reducing the risk of delivering faulty subscriber profiles, in particular for a mobile communication network. There is further a need for providing subscriber profiles which lead, when deployed to a secure element, to a lower likelihood of failure of the secure element than conventionally generated subscriber profiles.

At least one of these objectives is solved by the features of the independent claims. Further advantageous embodiments are described in the dependent patent claims.

In an aspect of the present invention there is provided a computer-implemented method for generating a subscriber profile configuration, preferably for a mobile communication network.

The subscriber profile configuration is generated in a data processing system comprising a processing unit and a memory unit. The memory unit comprises instructions for implementing an artificial intelligence system, wherein the instructions are executed by the processing unit. The artificial intelligence system has been trained based on training data comprising an initialization structure, a plurality of personalization specifications and existing subscriber profile configurations generated based on the initialization structure and the plurality of personalization specifications.

The method comprises receiving configuration input data from at least one computer system external to the data processing system. The method further comprises processing the configuration input data by the artificial intelligence system. The method further comprises generating the subscriber profile configuration based on the artificial intelligence system, wherein an output of the artificial intelligence system comprises the generated subscriber profile configuration.

The method may generate subscriber profile configurations which are synchronized with the initialization structure. Preferably, the initialization structure is a customer-specific initialization document, also called original source (OS) initialization document or OS INI file/doc/config. The initialization document may comprise a subset of all attributes and their values that are defined in the plurality of personalization specifications. In other words, the personalization specifications may comprise general specifications on how to personalize the subscriber profile configuration. The plurality of personalization specifications may be also referred to as specification personalization guide.

The plurality of personalization specifications may relate to all files and applications that may be installed in a secure element. Thus, the plurality of personalization specifications may comprise a very large number of attributes or elements, and their respective values, i.e., specify a very large parameter space. Due to such a large parameter space, the chance for misaligned subscriber profile configurations in the usual manual process described above is relatively high.

The subscriber profile configuration may comprise a list of attribute-value pairs. At least a portion of this list enables a secure element, in which the subscriber profile comprising the generated subscriber profile configuration is installed, to establish a secure connection over the mobile communication network. To establish the secure connection with the mobile communication network, unique data per card or secure element (ICCID, IMEI, KEY, or the like) may need to be generated and merged during card production. In addition, relevant elements regarding authentication of the secure element may need to be integrated in a mobile communication network entity.

The artificial intelligence system may be configured to process, i.e., regenerate existing subscriber profile configurations and generate new subscriber profile configurations. In both cases, a final subscriber profile configuration is generated which may form the output of the artificial intelligence system.

Independent of the algorithms of the artificial intelligence system, the training data may be normalized and/or tokenized, preferably after being converted into a list of strings. The training data may comprise relationships between a respective existing subscriber profile configuration and a respective initialization structure and respective personalization specifications. The training data may further comprise a label which indicates whether a subscriber profile configuration fulfills the requirements of the initialization structure. The label may comprise a coarse-grained label which relates to subscriber profile configurations as such and/or a fine-grained label which relates to individual attribute-pair values of the subscriber profile configurations. The configuration input data may be prepared according to the same pre-processing steps as applied to the training data.

The training data may further comprise artificial subscriber profile configurations which are generated based on the initialization structure and the plurality of personalization specifications. In principle, the initialization structure may be considered as a set of rules for creating subscriber profile configurations based on the plurality of personalization specifications. However, due to the very large parameter space of the latter which comprises a very large number of possible combinations of attribute-value pairs, it is not possible to generate all possible valid subscriber profile configurations using a brute force approach. Instead, the artificial subscriber profile configurations, may be considered as a sampling of the parameter space which may considerably enrich the quality of the training data. For the artificial subscriber profile configurations, the label may be trivially provided.

In one embodiment, the method may comprise generating artificial subscriber profile configurations to enrich the training data by data augmentation, in particular by randomly selecting attribute-value pairs out of the plurality of personalization specifications under the constraint of the initialization structure. In one embodiment, the method may instruct a pre-trained model to generate a plurality of new artificial subscriber profile configurations.

The artificial intelligence system may comprise a method for classifying an existing profile configuration. For instance, the artificial intelligence system may comprise a random forest method for classifying existing subscriber profile configurations as valid or invalid and/or for classifying each attribute-value pair of an existing subscriber profile configuration as valid or invalid. Instead of or additional to the random forest method, the artificial intelligence system may comprise a gradient boosting method, a support vector machine, or a feed-forward neural network for executing above classification task. The artificial intelligence system may classify an existing subscriber profile configuration using two or more classification methods and consider only those subscriber profile configuration or attribute-value pairs thereof as valid, which are predicted to be valid consistently by the two or more classification methods.

The artificial intelligence system may comprise a method for generating a new subscriber profile configuration based on an existing subscriber profile configuration comprising an error. In a first step, the artificial intelligence system may classify the existing subscriber profile configuration to identify the error. For example, the error may be a value of an attribute-value pair that violates the initialization structure, i.e., the customer requirements. In a second step, the artificial intelligence system may predict, based on the training data, a valid correction for the error, e.g., a valid value for the identified attribute. By replacing the error with the predicted correction, a valid subscriber profile configuration may be generated. In other words, the faulty subscriber profile configuration may be regenerated based on the predicted correction. The method may further comprise storing the (regenerated subscriber profile configuration in the training data such that a steadily increased trained data may be used for regularly fine-tuning the methods of the artificial intelligence system.

The artificial intelligence system may comprise a method for clustering or categorizing existing subscriber profile configurations. The artificial intelligence system may comprise a k-Means method, a hierarchical clustering method, a DBSCAN method, and/or combinations thereof for determining clusters of existing subscriber profile configurations. Based on the determined clusters, a subset of the subscriber profile configuration which largely overlaps among the existing subscriber profile configurations may be identified. For instance, attribute-value pairs which are identical in existing subscriber profile configurations independently of the customer requirements may be identified and summarized as base configuration. The new subscriber profile configuration may be generated based on the base configuration. Accordingly, the number of attribute-value pairs that may set manually or based on the artificial intelligence system, can be reduced, which accordingly reduces the likelihood of faulty subscriber profile configurations.

The artificial intelligence system may comprise a Generative Adversarial Network (GAN) based on which new subscriber profile configuration may be generated. The GAN may comprise two neural networks, called the generator and the discriminator, which are trained simultaneously in a competitive setting based on the training data. In one embodiment, the GAN may be a pre-trained model which may be queried based on a prompt which includes the input data. In one embodiment, the GAN may result from adaptation of a model which has been pre-trained, preferably based on training data comprising attribute-value pairs, by a transfer learning technique. The pretrained model comprises a set of weights for a given model architecture. During fine-tuning the pretrained model, the model architecture, in particular the number of output nodes, may be adapted to the output nodes required to generate a valid subscriber profile configuration. The adapted model architecture may be trained based on the pretrained weights and the training data to generate a generative adversarial model that is fine-tuned to the generation of valid subscriber profile configurations. In case the training data is limited, the weights of the lower levels of the model architecture may be fixed, such that only the weights of the upper levels of the model architecture are adapted to the training data. This procedure may prevent an overfitting of the artificial intelligence system in case the number of existing valid subscriber profile configuration is small compared to the size of the parameter space.

The configuration input data may comprise an existing subscriber profile configuration which preferably includes at least one error. The method may further comprise validating the configuration input data based on the artificial intelligence system. When the existing subscriber profile configuration is faulty, the output may further comprise the at least one error.

Validating the configuration input data may comprise predicting a similarity between the existing faulty subscriber profile configuration and an expectation space of subscriber profile configurations. The expectation space of subscriber profile configurations may be populated based on the training data.

In one embodiment, the subscriber profile configurations in the training data may be clustered based on a similarity score, wherein the expectation space of subscriber profile configurations may comprise the determined clusters. Validating the configuration may comprise determining a cluster representation of the faulty subscriber profile configuration, i.e., determine to which of the determined cluster the faulty subscriber profile configuration corresponds to.

Validating the configuration may include predicting the similarity based on a validity score for the existing faulty subscriber profile configuration of the input data for each attribute of the profile configuration.

The method may further comprise regenerating the existing faulty subscriber profile configuration based on the artificial intelligence system. The output may further comprise the generated profile configuration, in which the at least one error is corrected.

The at least one error comprises an attribute-value pair that violates a requirement of the initialization structure.

In other words, the method may determine an error of the faulty subscriber profile configuration with respect to the initialization structure. This error may not be considered an error based on the plurality of personalization specifications, and thus may not be detected using prior art validation tools for validating subscriber profile configurations.

The configuration input data may comprise a new initialization structure and/or a customer personalization specification. The customer personalization specification may enable and/or disable at least one attribute of the new initialization structure.

In other words, the customer personalization specification may further specify the initialization structure. The customer personalization specification may be one of the plurality of personalization specifications.

The configuration input data may further comprise a customer specific data management instruction. The method may further comprise customizing the generated subscriber profile configuration by applying the customer specific data management instructions, preferably to rename at least one attribute of the list of attribute-value pairs.

The customer specific data management instruction may fulfill the requirements of the initialization structure and the plurality of personalization specifications.

The generated subscriber profile configuration may be represented by an XML file. The method may further comprise storing the generated subscriber profile configuration in a subscriber profile.

Storing the generated subscriber profile configuration in an XML format facilitates integration of the artificial intelligence system into workflows for generating subscriber profiles.

The plurality of personalization specifications may comprise at least one configuration relating to a subscriber profile component out of the group comprising: file system; Global Platform, GP, application; telecommunication application; network authentication; keys and PINs; remote file management; and/or combinations thereof.

The file system may be specified according to ETSI 102 221, ETSI 102 222, 3GPP 31.102 ,3GPP 31.103, which may form part of the plurality of personalization specifications. The attributes related to the file system may include application dedicated files (ADF), ID, Type, Size, access conditions and further attributes of the files; an attribute which labels the file to one of three categories including mandatory, optional and conditional, of which the latter two may depend on the customer specification. The attributes may further comprise the content of the files, e.g., a voltage configuration and configurations enabled for higher endurance of the files. The attributes may further include manufacturer specific tags included in file creation and content of file.

The GP application configuration may be specified according to GPCS 2.3.1, UICC config 2.0, CIC config 2.1, which may form part of the plurality of personalization specifications. The attributes related to the GP application configuration may include Application and package identifies (AID), privilege configuration, pre-shared Keys system including SCP8x key, SCP0x key, DAP key, Token keys, etc. The attributes may further include a Customers Telco Toolkit Applet AID configuration, a related Install Parameter configuration and a Personalization configuration thereof. The attributes may further include a Customers Java Applet AID configuration, a related Install Parameter configuration and a Personalization configuration thereof.

The attributes related to the telecommunication application may include ADF(S), File system(s) and Configuration (Application Name: GSM, 3G,4G(ISIM),5G, WIB, SAT, RUIM/CSIM, EAP-AKA' etc), as well as manufacturer specific configuration.

The network authentication configuration may be specified in 3GPP33.102, 3GPP33.105, which may form part of the plurality of personalization specifications. The attributes related to the network authentication configuration may include an authentication algorithm, a configuration and a long-term key configuration, for 16 Bytes and/or 32 Bytes.

The PIN file configuration may be specified in ETSI 102 221, ETSI 102 222, which may form part of the plurality of personalization specifications. The attributes related to the PIN file configuration may include parameters to enable a production tool to individualize PIN files/Application Configuration per secure element uniquely.

The remote file management configuration may be specified in ETSI 102 226, GP Amd B 1.2, which may form part of the plurality of personalization specifications. The attributes related to the remote file management (RFM) may include RMF application(s) AID configuration, a related Install Parameter configuration including ToolKit Parameter(s). The attributes may further include remote application management (RAM) application(s) AID configuration, a related Install Parameter configuration including ToolKit Parameter(s). The attributes may further include over-the-air HyperText Transfer Protocol (OTAHTTP) -AdminAgent application(s) AID configuration, a related Install Parameter configuration including ToolKit Parameter(s). The attributes may further include a file configuration for Server enablement

The method may further comprise generating a subscriber profile based on the generated subscriber profile configuration. The subscriber profile may be configured to be installed in a secure element to enable the secure element to establish the secure connection over the mobile communication network.

In another aspect, a computer-implemented method for validating and/or regenerating a subscriber profile configuration, preferably for a mobile communication network, is provided.

The subscriber profile configuration is validated and/or regenerated in a data processing system comprising a processing unit and a memory unit. The memory unit comprises instructions for implementing an artificial intelligence system, wherein the instructions are executed by the processing unit. The artificial intelligence system has been trained based on training data comprising an initialization structure, a plurality of personalization specifications and existing subscriber profile configurations generated based on the initialization structure and the plurality of personalization specifications.

The method comprises receiving an existing subscriber profile configuration as configuration input data from at least one computer system external to the data processing system. The method further comprises processing the input data by the artificial intelligence system. The method further comprises validating the existing subscriber profile configuration based on the artificial intelligence system. When determining an error in the existing subscriber profile configuration with respect to the initialization structure, the method further comprises regenerating the existing subscriber profile configuration to exclude the error, wherein an output of the artificial intelligence system comprises the regenerated subscriber profile configuration.

The method according to this aspect relates to the method of the aspect described above in that regenerating the subscriber profile configuration may be a special case of generating the subscriber profile configuration. In both cases the output of the artificial intelligence system may include a new subscriber profile configuration which is at least more likely to be valid with respect to the initialization structure than conventionally validated and/or generated subscriber profile configurations.

In another aspect, a computer-implemented method for generating a subscriber profile configuration, preferably for a mobile communication network, is provided.

The subscriber profile configuration is generated in a data processing system comprising a processing unit and a memory unit. The memory unit comprises instructions for implementing an artificial intelligence system, wherein the instructions are executed by the processing unit. The artificial intelligence system has been trained based on training data comprising an initialization structure, a plurality of personalization specifications and existing subscriber profile configurations generated based on the initialization structure and the plurality of personalization specifications.

The method comprises receiving a (new) initialization structure and/or a customer personalization specification as configuration input data from at least one computer system external to the data processing system. The method further comprises processing the input data by the artificial intelligence system. The method further comprises generating a new subscriber profile configuration based on the artificial intelligence system, wherein an output of the artificial intelligence system comprises the generated subscriber profile configuration.

The method according to this aspect relates to the method of the aspects described above in that the output of the artificial intelligence system includes a new subscriber profile configuration which is at least more likely to be valid with respect to the initialization structure and/or the customer personalization specification than conventionally validated and/or generated subscriber profile configurations.

In an aspect of the present invention, a data processing system for validation and/or generation of a subscriber profile configuration, preferably for a mobile communication network, is provided. The data processing system comprises a processing unit and a memory unit. The memory unit comprises instructions for implementing an artificial intelligence system. The artificial intelligence system has been trained based on training data comprising an initialization structure, a plurality of personalization specifications and existing subscriber profile configurations generated based on the initialization structure and the plurality of personalization specifications. The processing unit is configured to execute the instructions, based on which the processing unit is configured to execute the method according to any of the aspects described above.

The data processing system may further comprise a first data interface for receiving configuration input data comprising an existing subscriber profile configuration which preferably includes at least one error. Alternatively, or additionally, the data processing system may comprise a second data interface for receiving configuration input data comprising a new initialization structure and/or a customer personalization specification. Alternatively, or additionally, the data processing system may comprise a third data interface for receiving configuration input data comprising a customer specific data management instruction.

The data processing system may further comprise a data customization unit, which may be configured to receive a generated subscriber profile configuration and a customer specific data management instruction, to post-process the generated subscriber profile configuration based on the customer specific data management instruction, preferably to rename at least one attribute of the list of attribute-value pairs.

In a further aspect of the present invention, a secure element for establishing a secure communication over the mobile communication network is provided. the secure element comprises a secure storage unit, in which a subscriber profile comprising a subscriber profile configuration as generated according to the method as described above is stored. The secure element further comprises a secure control unit which is configured to establish the secure communication based on the subscriber profile.

The secure element may be any of the group consisting of a subscriber identity module, SIM, an embedded SIM, an integrated SIM, a software application, and combinations thereof.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element can also be a software component in a trusted part of an operating system, a so-called Trusted Execution Environment, or TEE, of the device. For example, the secure element is formed within a secure runtime environment in the form of programs running therein, so-called "trustlets".

The secure element can also be an integral part of a larger integrated circuit, such as a modem or application processor. Such UICCs are referred to as "integrated UICC", "integrated TRE", "integrated eUICC" or "integrated SE". Such secure elements are permanently integrated into an SoC as an integrated processor block and can be connected via an in-chip bus.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the SE can be operable by means of a terminal device, whereby the SE in this embodiment is self-sufficient except for supply signals such as supply voltage, clock, reset, etc. Then the SE may have an interface (data interface, communication interface) for communication with the terminal device, into which the SE may be inserted ready for operation. This communication preferably takes place via a connection protocol, in particular a protocol in accordance with the ETSI TS 102 221 or ISO-7816 standard.

In yet a further aspect of the present invention, a computer-readable medium is provided. The computer-readable medium comprises instructions which, when executed by a processing unit, cause the processing unit to carry out the method as described above.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a schema for generating subscriber profiles according to prior art.
Fig. 2a shows an exemplary embodiment of a method according to an aspect of the invention.
Fig. 2b shows an exemplary embodiment of a data processing system configured to execute the method according to Fig. 2a.
Fig. 3a shows another exemplary embodiment of a method according to an aspect of the invention.
Fig. 3b shows an exemplary embodiment of a data processing system configured to execute the method according to Fig. 3a.
Fig. 4 shows an exemplary embodiment of a secure element which is equipped with a subscriber profile generated according to an aspect of the invention.

Fig. 1 summarizes the process for generating new subscriber profiles 30 according to prior art.

The process sketched in Fig. 1 involves a manual step of inputting attribute values based on a customer specific initialization structure, e.g., an OS INI document. The human operator 15 manually feeds a subscriber profile generator 40 with values for the attributes as specified by the OS INI document. These values may be provided by the OS INI document and/or generated by the human operator 15 and therefore rely on her/his knowledge and/or experience of generating subscriber profiles.

The generated subscriber profiles 30 are subsequently validated by a subscriber profile validator 50, based on a general specification, e.g., a plurality of personalization specifications 20. The subscriber profile validator 50 generates a validation report 55.

Subsequently, different examples of problems that may appear in generated subscriber profile configurations as generated based on above process are illustrated. These examples do by far not represent a complete list of problems with above process of generating subscriber profiles.

### Example 1

In one case, the OS INI document specifies that optional features such as DAP-ECC() is disabled, i.e., set as OFF or 0, representing NOT demanded by customer. The human operator 15, however, may reuse an existing subscriber profile configuration to generate the new subscriber profile without adapting said attribute DAP-ECC. In the reused profile configuration, said attribute DAP-ECC may be marked as Privilege in the reused profile configuration with related ECC Public keys being stored in the reused profile configuration. In this case, the subscriber profile validator 50 will NOT throw Error instead validate the newly generated subscriber profile 30 successfully. However, the customer does not support this option enabled by the subscriber profile configuration. Thus, a secure element equipped with the newly generated subscriber profile may not work.

### Example 2

In one case, an OS INI document may require one specific BERTLV-EF_URSP file in a profile for a customer, whereas the generated subscriber profile configuration may include more than one BERTLV file, e.g., 5-6 BERTLV files, which are correct according to the general specification but not asked by customers. Such configuration would be wrongly classified as valid by the subscriber profile validator 50, since as per general specification this profile configuration is correct. Accordingly, subscriber profiles may be generated by above process which blocks the secure memory (NVM) of a secure element due to unwanted files in the subscriber profile.

### Example 3

In one case, the OS INI document may specify voltages to be 1.8V only. However, the newly generated subscriber profile may include a configuration of voltages such as 5 V and/or 3 V, due to manual input into the subscriber profile generator 40. According to prior art, such profile configuration would be approved as valid by the current subscriber profile validator 50. In practice, however, a secure element equipped with such faulty subscriber profile configuration (in view of the OS INI document) will cause failure of service. Such subscriber profile will be just lost after its deployment. In other words, once the faulty subscription profile is (deployed to and) installed in an EUICC, the EUICC cannot operate, and the subscription profile may not be corrected anymore. In such situation, even the EUICC is lost from an operating point of view, since it cannot be accessed remotely anymore.

### Example 4

In one case, the OS INI document may specify profile configuration A and HNPK, whereas the newly generated profile includes configuration profile B and HNPK as compressed. According to prior art, such profile configuration would be approved as valid by the current subscriber profile validator 50. In practice, however, a secure element equipped with such faulty subscriber profile configuration (in view of the OS INI document) will be unusable and may even be lost.

In all examples presented above, the method according to an aspect of the invention may throw an error during processing, e.g., validating, and/or systematically avoid subscriber profile configurations which are ill-defined or faulty with respect to the initialization structure, e.g., the OS INI document.

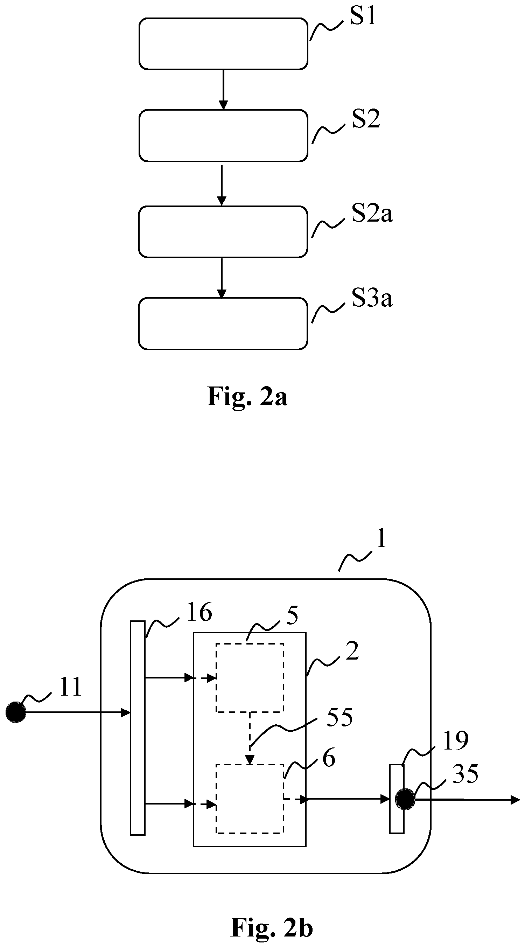

Fig. 2a and Fig. 2b show an exemplary embodiment of a method and corresponding data processing system 1 according to an aspect of the invention.

The method may comprise receiving S1 an existing subscriber profile configuration as input data from at least one computer system external to the data processing system 1.

The method may further comprise processing S2 the input data by the artificial intelligence system 2.

The method may further comprise validating S2a the existing subscriber profile configuration based on the artificial intelligence system 2.

When determining an error in the existing subscriber profile configuration with respect to the initialization structure 10, the method may further comprise regenerating S3a the existing subscriber profile configuration to exclude the error.

An output of the artificial intelligence system 2 comprises the regenerated subscriber profile configuration 35.

Optionally, the method may comprise generating a validation report 55, based on which the error may be determined.

Optionally, the data processing system 1 may comprise a first data interface 16 for receiving configuration input data comprising an existing subscriber profile configuration, preferably an existing faulty subscriber profile configuration which includes at least one error. The first data interface 16 may forward the received configuration input to the artificial intelligence system 2.

Optionally, the data processing system 1 may comprise a subscriber profile configuration validation unit 5, preferably forming part of the artificial intelligence system 2. The first data interface 16 may forward the received configuration input to the subscriber profile configuration validation unit 5. The subscriber profile configuration validation unit 4 may be configured to execute step S2a.

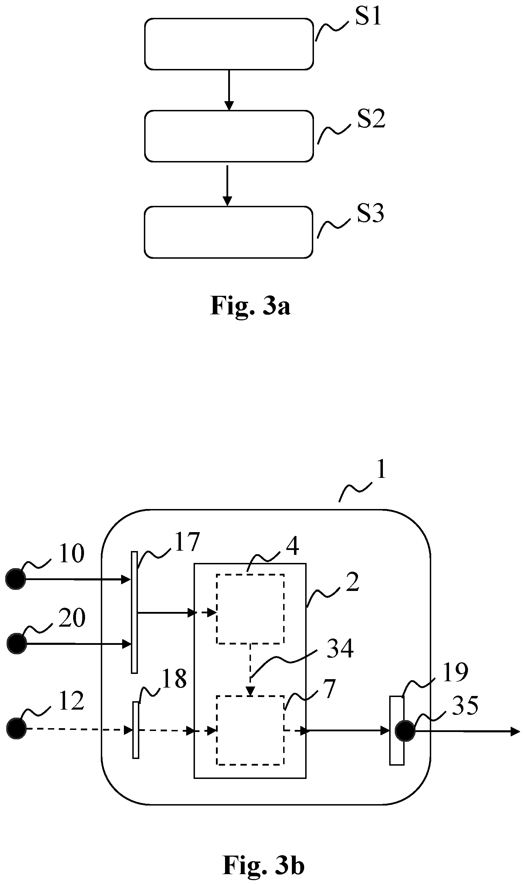

Optionally, the data processing system 1 may comprise a subscriber profile regeneration unit 6, preferably forming part of the artificial intelligence system 2. The first data interface 16 may forward the received configuration input to the subscriber profile regeneration unit 6. The subscriber profile regeneration unit 6 may be configured to execute step S3a and/or step S3 (described with reference to Fig. 3a).

Optionally, the data processing system 1 may comprise an output data interface 19, which may be configured to receive and provide an output of the artificial intelligence system 2, in particular a (newly) generated subscriber profile configuration 35, preferably having an XML format.

Fig. 3a and Fig. 3b show an exemplary embodiment of a method and corresponding data processing system 1 according to another aspect of the invention.

The method may comprise receiving S1 a (new) initialization structure 10 and/or a customer personalization specification 21 as configuration input data from at least one computer system external to the data processing system 1.

The method may further comprise processing S2 the input data by the artificial intelligence system 2.

The method may further comprise generating S3 a (new) subscriber profile configuration 34, 35 based on the artificial intelligence system 2.

Optionally, the data processing system 1 may comprise a second data interface 17 for receiving said configuration input data. The second data interface 17 may forward the received configuration input data to the artificial intelligence system 2.

Optionally, the data processing system 1 may comprise a subscriber profile generation unit 4, preferably forming part of the artificial intelligence system 2. The second data interface 17 may forward the received configuration input to the subscriber profile generation unit 4. The subscriber profile generation unit 4 may be configured to execute step S3. The subscriber profile generation unit 4 may output a newly generated subscriber profile configuration, preferably as XML file, based on which a well-functioning subscriber profile may be deployed.

Optionally, the data processing system 1 may include a data customization unit 7, which may be configured to customize the generated subscriber profile configuration 34. The data processing system 1 may include a third data interface 18, which may be configured to receive a customer specific data management instruction 12. The third data interface 18 may be configured to forward to the customer specific data management instruction 12 to the artificial intelligence system 2 and/or the data customization unit 7. After executing the customer specific data management instruction, the data customization unit 7 may provide an adapted new subscriber profile configuration 35.

Optionally, the data processing system 1 may comprise an output data interface 19, which may be configured to receive and provide an output of the artificial intelligence system 2, in particular a (newly) generated subscriber profile configuration 34, 35, preferably having an XML format.

The method and data processing system 1 as described above with respect to Fig. 2a and 2b may be implemented separately or in combination with the method and data processing system 1 as described with respect to Fig. 3a and 3b. Specifically, a single data processing system 1 including a subscriber profile configuration validating unit 5, a subscriber profile configuration generating unit 4, a subscriber profile regenerating unit 6 and/or a data customization unit 7 is included, may be implemented.

For example, the method step S3 of generating the subscriber profile configuration based on the AI system 2, e.g., the subscriber profile configuration generating unit 4 may be trained based on subscriber profile configurations regenerated previously based on the subscriber profile configuration validation unit 5 and the subscriber profile regenerating unit 6.

In a first phase of implementing the artificial intelligence system 2, the focus may be laid on validating existing subscriber profile configurations, in particular based on similarity measures with respect to the OS INI document (initialization structure 10); preventing a generation of files that are compliant with the general specification but unwanted from the OS INI document; and/or categorize configurable attributes/elements in the subscriber profile configuration that fluctuate/vary between different OS INI documents. To distinguish static and dynamic attributes in a collection of initialization structures of different customers, may improve the training of an algorithm for generating the subscriber profile configurations, since only the values for the dynamic attributes may need to be predicted.

In a second phase of implementing the artificial system, generating a new subscriber profile configuration may include generating a base profile configuration based on the identified attribute-value pairs which coincide between initialization structures of various customers. The base profile configuration may be stored as template in a storage unit of the data processing system 1 and subsequently used for generating subscriber profile configurations 35.

The second phase may further comprise aligning the to be generated subscriber profile configuration with the initialization structure, i.e., the attribute-value pairs or switches encoded in a respective OS INI document. The second phase may further comprise validating the generated subscriber profile configurations against the configuration input data, i.e., the initialization structure 10 and/or the plurality of personalization specifications 20. The algorithms trained for the second phase may be trained based on existing subscriber profile configuration as (re)generated in the first phase and related processing data.

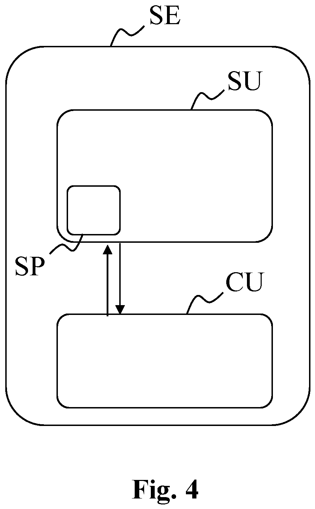

Fig. 4 shows an exemplary embodiment of a secure element SE which is equipped with a subscriber profile SP generated according to an aspect of the invention.

The secure element SE may comprise a secure storage unit SU, in which the subscriber profile SP generated according to any aspect of the invention as described above. The secure element SE may comprise a secure control unit CU, which may be configured to establish a secure connection to a mobile communication network of the customer, based on which configuration input data 10, 11, 12, 20 the subscriber profile configuration 35 of the subscriber profile SP has been generated.

### Reference signs:

- 1: Data processing system
- 2: AI system
- 4: Subscriber profile configuration generation unit
- 5: Subscriber profile configuration validation unit
- 6: Subscriber profile regeneration unit
- 7: Data customization unit
- 10: Initialization structure
- 11: Existing subscriber profile configuration
- 12: Customer specific data Management instruction
- 16: First data interface
- 17: Second data interface
- 18: Third data interface
- 19: Output data interface
- 20: Plurality of personalization specifications
- 21: Customer personalization specification
- 30: Manually generated subscriber profile configuration
- 34: Intermediate subscriber profile configuration
- 35: Generated subscriber profile configuration
- 40: Profile generator (prior art)
- 50: Profile validator (prior art)
- 55: Validation report

- S1: Receiving configuration input data
- S2: Processing configuration input data
- S2a: Validating configuration input data
- S3: Generating subscriber profile configuration
- S3a: Regenerating existing subscriber profile configuration

- SE: secure element
- SU: Secure storage unit
- CU: Secure control unit
- SP: Subscriber Profile

## Claims

1. A computer-implemented method for generating a subscriber profile configuration (34, 35), preferably for a mobile communication network, in a data processing system (1) comprising a processing unit and a memory unit, the memory unit comprising instructions for implementing an artificial intelligence system (2), wherein the instructions are executed by the processing unit, the method comprising:
- receiving configuration input data (10, 11, 12, 21) from at least one computer system external to the data processing system (1);
- processing the configuration input data (10, 11, 12, 21) by the artificial intelligence system (2), wherein the artificial intelligence system (2) has been trained based on training data comprising an initialization structure (10), a plurality of personalization specifications (20) and existing subscriber profile configurations (11) generated based on the initialization structure (10) and the plurality of personalization specifications (20); and
- generating the subscriber profile configuration (34, 35) based on the artificial intelligence system (2), wherein an output of the artificial intelligence system (2) comprises the generated subscriber profile configuration (34, 35).

2. The method of claim 1, wherein the subscriber profile configuration (11, 34, 35) comprises a list of attribute-value pairs, of which at least a portion enables a secure element (SE), in which the subscriber profile comprising the generated subscriber profile configuration (34, 35) is installed, to establish a secure connection over the mobile communication network.

3. The method of claims 1 or 2, wherein the configuration input data (10, 11, 12, 21) comprises an existing subscriber profile configuration (11), which preferably includes at least one error, wherein the method further comprises validating the configuration input data (11) based on the artificial intelligence system (2), wherein, when the existing subscriber profile configuration (11) is faulty, the output further comprises the at least one error.

4. The method of claim 3, wherein validating the configuration input data (11) comprises predicting a similarity between the existing subscriber profile configuration (11) and an expectation space of subscriber profile configurations, wherein the expectation space of subscriber profile configurations is populated based on the training data.

5. The method of claim 3 or 4, further comprising regenerating, when the existing subscriber profile configuration (11) is faulty, the existing subscriber profile configuration (11) based on the artificial intelligence system (2), wherein the output further comprises the generated subscriber profile configuration (35), in which the at least one error is corrected.

6. The method of any of claims 3 to 5, wherein the at least one error comprises an attribute-value pair that violates a requirement of the initialization structure (10).

7. The method of claim 1 or 2, wherein the configuration input data (10, 11, 12, 21) comprises a new initialization structure (10) and/or a customer personalization specification (21), wherein the customer personalization specification (21) enables and/or disables at least one attribute of the new initialization structure (10).

8. The method of any of the preceding claims, wherein the configuration input data (10, 11, 12, 21) further comprises a customer specific data management instruction (12), wherein the method further comprises customizing the generated subscriber profile configuration (34) by applying the customer specific data management instructions (12), preferably to rename at least one attribute of the list of attribute-value pairs.

9. The method of any of the preceding claims, wherein the generated subscriber profile configuration (34, 35) is represented by an XML file, and/or wherein storing the generated subscriber profile configuration (34, 35) in a subscriber profile.

10. The method of any of the preceding claims, wherein the plurality of personalization specifications (20) comprises at least one configuration relating to a subscriber profile component out of the group comprising:
- file system,
- Global Platform, GP, application,
- telecommunication application,
- network authentication,
- keys and PINs,
- remote file management, and/or
- combinations thereof.

11. The method of any of the preceding claims, further comprising generating a subscriber profile (SP) based on the generated subscriber profile configuration (34, 35), wherein the subscriber profile is configured to be installed in a secure element (SE) to enable the secure element (SE) to establish the secure connection over the mobile communication network.

12. A data processing system (1) for validation and/or generation of a subscriber profile configuration, preferably for a mobile communication network, the data processing system comprising a processing unit and a memory unit, the memory unit comprising instructions for implementing an artificial intelligence system (2), wherein the processing unit is configured to execute the instructions, based on which the processing unit is configured to execute the method according to any of the preceding claims.

13. The data processing system (1) of claim 12, further comprising:
- a first data interface (16) for receiving configuration input data (10, 11, 12, 21) comprising an existing subscriber profile configuration (11) which preferably includes at least one error; and/or
- a second data interface (17) for receiving configuration input data (10, 11, 12, 21) comprising a new initialization structure (10) and a customer personalization specification (21); and/or
- a third data interface (18) for receiving configuration input data (10, 11, 12, 21) comprising a customer specific data management instruction (12).

14. A secure element (SE) for establishing a secure communication over the mobile communication network, wherein the secure element (SE) comprises a secure storage unit (SU), in which a subscriber profile (SP) comprising a subscriber profile configuration (34, 35) as generated according to any of the claims 1 to 11 is stored, and a secure control unit (CU) configured to establish the secure communication based on the subscriber profile (SP).

15. A computer-readable medium comprising instructions which, when executed by a processing unit, cause the processing unit to carry out the method of any of claims 1 to 11.
